# EUROPEAN PATENT SPECIFICATION

(11) **EP 1 679 006 B1**
(45) Date of publication and mention of the grant of the patent: **02.05.2018**
(21) Application number: 06113109.0
(22) Date of filing: 06.02.2002
(51) Int. Cl.: A23B 7/16, A23L 19/00

(54) **Frozen fruits**
Gefrorene Früchte
Fruits congelés

(30) Priority: 06.02.2001 EP 01870019
(43) Date of publication of application: 12.07.2006
(62) Divisional of application: 02447020.5
(73) Proprietor: dirafrost F.F.I. n.v., 3540 Herk-de-Stad (BE)
(72) Inventor: Stulens, Els, 3010 Leuven (BE)
(74) Representative: Sonn & Partner Patentanwälte

(56) References cited:
- EP-A1- 0 512 274
- EP-A1- 0 865 740
- EP-A1- 0 950 355
- EP-A1- 0 950 355
- FR-A1- 2 726 739
- GB-A- 2 100 575
- US-A- 2 137 205
- US-A- 2 511 609
- US-A- 2 909 435
- US-A- 4 713 252
- PATENT ABSTRACTS OF JAPAN vol. 006, no. 174 (C-123), 8 September 1982 (1982-09-08) -& JP 57, 091150, A, (Q P CORP), 7 June 1982 (1982-06-07)
- PATENT ABSTRACTS OF JAPAN vol. 004, no. 151 (C-028), 23 October 1980 (1980-10-23) & JP 55, 096054, A, (OOTA TOSHIYUKI;OTHERS: 01), 21 July 1980 (1980-07-21)
- FORBERG: "Forberg vacuum coater", BROCHURE OF FORBERG, XX, XX, 1 April 1998 (1998-04-01), pages 1-4, XP002991172,
- AIR PRODUCTS: "cryo-tumbler - hoge kwaliteit IQF invriezen en coaten", BROCHURE OF AIR PRODUCTS, XX, XX, 1 September 1996 (1996-09-01), pages 1-2, XP002991173,
- AGA GAS GMBH AND CO: "Coating - Ummanteln lose rollender, gefrorener Produkte", BROCHURE OF AGA GAS GMBH, XX, DE, 1 September 1998 (1998-09-01), pages 1-2, XP002991174,
- FORBERG: "Forberg vacuum coater", BROCHURE OF FORBERG, XX, XX, 1 April 1998 (1998-04-01), pages 1-4, XP002991172,
- AGA GAS GMBH AND CO: "Coating - Ummanteln lose rollender, gefrorener Produkte", BROCHURE OF AGA GAS GMBH, XX, DE, 1 September 1998 (1998-09-01), pages 1-2, XP002991174,

## Description

### Field of the invention

The present invention is related to frozen fruits, especially strawberries, which can be put on pies without leaking their juice, to the preparation process of said frozen fruits and to their use in various food preparations.

### Background of the invention and state of the art

Usually, for various food applications, such as strawberry pie, only fresh strawberries are used, because when frozen strawberries are thawed, they tend to loose their juice, due to a broken cell structure by freezing. This characteristic is inherent to the structure of the fruit itself. When they lose their juice the pie becomes wet and the fruits slip off the pie.

However, fresh strawberries are only available during harvest periods. They have to be washed, destalked and cut in half before they can be used on a fruit preparation such as a pie.

On the other hand, frozen fruits are available during the whole year and are easier to handle. They can be used directly, especially on pastry, such as a pie, covered thereafter with glazing gel. Once thawed they are ready for consumption.

However, when the fruit is thawing, the juice is captured by said glazing gel which results in an organoleptically unpleasant gel. Further, leaking juice can soak the pastry underneath it. Therefore, frozen fruits are in practice not used for this purpose due to the leaking of juice and the consequences thereof for a food composition.

Several documents describe special techniques for freezing foodstuff and more particularly fruit such as strawberries.

JP 57091150-A describes a method for freezing strawberries which comprises smearing fresh strawberries with high amounts of powdery saccharides such as sugar together with a thickener such as xanthan gum. The saccharides are applied in high amounts (from 5 to 50 weight%, preferably between 20 and 40 weight%), leading to a sticky, sweet and unattractive mixture after thawing. EP-A-512274 also describes a method for conserving strawberries in which high concentrations (2 to 50, preferably 25 to 40 weight%) of sugar.

US 4,713,252 describes a method for conserving fruit comprising the step of mixing fresh or frozen fruit with sugar syrup in a tumbler, with as result the lowering the fruit's water activity while augmenting the sugar content. 16 to 50 weight % sugar is used. Result of the method is dried sweetened fruit, which needs to be rehydrated if one wishes to use it in stead of fresh fruit in a fruit preparation.

Other documents such as JP 5506054-A and GB 2100575 describe methods for improving preservation by coating with a preserving agent such as ascorbic acid.

US 2,511,609 relates to dietetic foods; and more particularly to dietetic frozen fruits and methods of making the same. Frozen fruit containing from 0.01% to 0.075% saccharin, and added pectin in amounts from 10 to 40 times the saccharin content is disclosed. Furthermore, a method is described of inhibiting undesirable taste in frozen fruits sweetened with saccharin, which comprises adding thereto pectin in amounts from 10 to 40 times the saccharin content thereof.

US 2,909,435 relates to the application of protective coatings to raisins and other foods.

US 2,137,205 relates to the preservation of food materials by freezing. A method of freezing food material is provided in which deterioration is reduced.

EP 0 865 740 relates to a coated food product and process for the preparation thereof . A process for the manufacture of a particulate-coated food product is disclosed, comprising (a) enrobing a frozen food core with an adhesion agent, which has a temperature of from 0 to 20 °C, a viscosity of from 0.1 to 6 Pas at 20 °C, a setting temperature of from 40 °C and 90 °C and a water binding capacity of from 0.3 to 5 g water per gram dry matter; (b) coating the enrobed food core with a particulate coating; and (c) freezing the food product; wherein the particulate coating is prepared by drying a food material such as dough under reduced pressure using microwave energy.

FR 2 726 739 discloses a process for freezing of strawberries and their use as a fresh strawberry.

EP0950355 discloses a method for preparing frozen fruit salad wherein frozen or deep-frozen fruit pieces are coated with an edible coating juice. Said method comprises the following steps: loading a continuously agitated sealed preparation container with fruit pieces, deaerating said container, dosing the coating juice into said container, and cryogenation of the mixture.

None of these prior art methods can provide a fruit product that, after thawing, has all the desired properties such as low water expulsion and a taste and caloric value which isn't influenced by high amounts of added sugar. This makes it impossible to provide a frozen fruit product which can serve as a base product for food compositions and which is close to the natural fresh fruit's flavour, organoleptical qualities and technological parameters.

### Aims of the invention

The present invention aims to provide frozen fruits or frozen fruit pieces, which can be added to a food composition, especially pastry such as pies in its frozen state, without leaking juice when thawing.

Another aim of the present invention is to provide a preparation process of said frozen fruit or frozen fruit pieces and which could be adapted to a general industrial process.

### Summary of the invention

The present invention is related to frozen fruit or frozen fruit pieces, coated with between 1 and 2 weight % of a coating powder layer able to avoid juice leaking from said fruit or fruit pieces. Said coating powder comprises a mixture of stabilising agents made of modified starch and edible gums.

Advantageously, said coating powder comprises, possibly with other additives, colouring agents, food grade acids, flavours, etc. a mixture of stabilising and gelling agents, made of modified starch, pectins, fructans (such as levan or inulin), edible gums (guar gum, xanthan gum, locust bean gum, gelan gum, ...) having gelling properties.

The frozen fruit and fruit pieces obtained according to the invention are advantageously obtained from individual quick frozen fruit (IQF) and are preferably IQF strawberry halves, healthy and ripe, obtained from non-fermented fruits.

The frozen fruit and fruit pieces obtained according to the invention, are advantageously individually encapsulated with the coating of the stabilising powder layer and could be qualified as an individual quick frozen fruits or fruit pieces which do not leak after thawing.

Another aspect of the present invention is related to the preparation process or method of said coated frozen fruits, comprising the following steps:
- loading a continuously agitated sealed preparation container with said fruits (individually quick frozen fruits),
- a deaeration step of said container or vessel, preferably lowering the pressure in said container or vessel to 0.2 bar or less,
- dosing the coating powder on the fruits,
- mixing the fruits and the powder in order to obtain a homogenous dispersion of the coating powder upon the surface of the fruits,
- recovering (advantageously discharge, packaging and storage, for instance, in (sterile) plastic bags, in a cardboard box) of the obtained fruits.

The obtained products can thereafter be easily portioned and put on a food composition, such as a pie, before consumption. In an embodiment according to the invention, all the steps for said preparation are performed under deep freeze temperature conditions (the container or vessel is advantageously pre-cooled at deep-freeze temperature (about -50 C° and preferably with liquid nitrogen) and the obtained products are stored at low temperature. The storage period of the obtained products under deep-freeze temperature condition (about -20 C°) can reach up to two years.

Advantageously, said preparation process could be adapted in order to be integrated in a classical "industrial" process for the preparation of a food composition which may require the addition of other elements in the powder layer such as food grade acids (citric acid, ascorbic acid, ...), food colours and specific flavours.

Usually, the amount of the specific powder layer used in said process varies from about 1% to about 2% in weight of the final obtained product (the total being 100%) in weight.

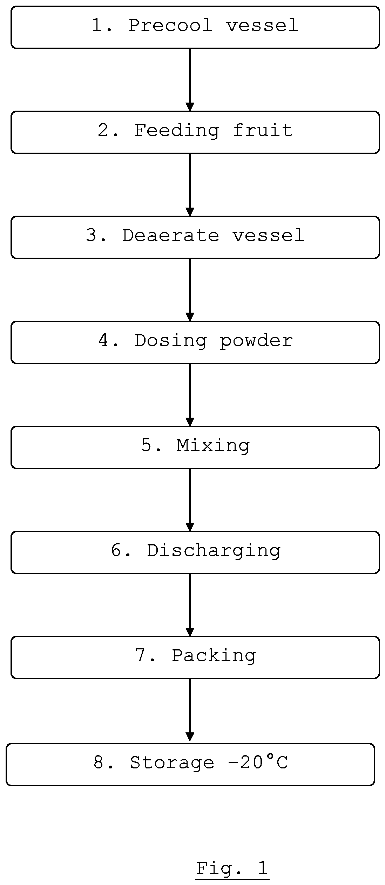

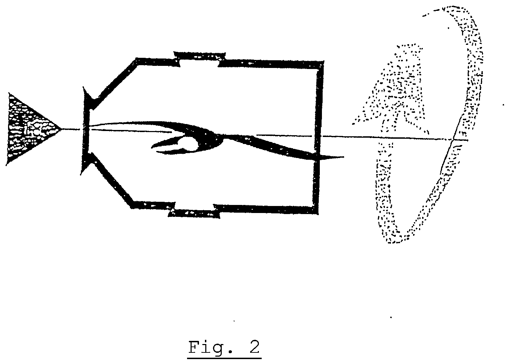

The present invention will be described in more details in the following example, in reference to the enclosed figure 1, showing a schematic flow chart of the various steps used in an embodiment of the method according to the invention and figure 2 representing the movement of the agitating vessel used in the present invention.

### Detailed description of the invention

### Ingredients

In the seasonable harvest of fruit, the ingredient fruits are selected according to their taste, their colour, their size and are cut up in pieces of an appropriate size.

The coating powder according to the invention is composed of a mixture of stabilising agents and possibly flavours.

Said stabilising agents take care of the "water-management" and are allowed to bind the water coming out of the fruit pieces and are a major factor to the success of the obtained frozen fruits or fruit pieces.

The juice coming out of the thawing fruit is absorbed by the stabilisers, which advantageously hydrates and forms a gel. The fruit will keep its shape in the gel layer. Said gel has advantageously a smooth texture in order to give a nice mouthfeel. The stabilising agents need to avoid syneresis after thawing. The stabilising agents have to be freeze-thaw stable and acid stable in order to allow the formation of a gel. Further, also a nice surface gloss is desirable.

Said mixture of stabilisers are made of modified starch and edible gums. Other ingredients such as food grade acids (citric acid, ascorbic acids), food colours and flavours can be also added to said coating powder. A preferred composition is presented in the following table 1.

| **Frozen fruit:** | |
|---|---|
| Strawberry halves | 100, 0 kg |

| **Powder mixture:** | |
|---|---|
| Modified starch | 0,8 kg |
| Guar gum | 0,27 kg |
| Xanthan gum | 0,05 kg |
| Flavour | 0,05 kg |

The preparation process is preferably executed according to the flow chart presented in figure 1:
- the vessel is pre-cooled to -50°C with liquid nitrogen,
- the frozen fruits are fed into the vessel,
- a deaeration step of said vessel, lowering the pressure in said vessel preferably to 0.2 bar or less,
- maximally 5 weight % of powder is dispersed uniformly on the surface of the fruits,
- the fruits and the powder are mixed in the agitating vessel,
- the coated fruits are discharged, packed, stored at -20°C.

The production of the coated fruits can take place in a sealed, agitating vessel, such as the one presented in figure 2.

In said process, the coating powder will be dispersed on the fruits surface and form a thin powder layer which will freeze around the fruit pieces, thus forming a coating layer on the fruit pieces.

The low temperature will result in an improved coating of the fruits and will guarantee also the microbiological stability of the obtained preparation.

The fruits can thereafter be put on a pie (possibly filled with a cream) in its frozen state, a glazing gel can be put on top of it, and when the fruits are thawed, the pie is ready for consumption.

The fruits obtained with the process according to the invention meet the aims of the invention, and are less sweetened by the added powder as any of the prior art product. Therefore, the obtained product according to the invention is more versatile, lower on calories and less sugar needs to be applied to obtain a long conservation frozen fruit.

In general, the following ranges apply for obtaining an acceptable product according to a preferred embodiment of the invention:

| **Frozen fruit:** | |
|---|---|
| Strawberry halves | 100,0 kg |

| **Powder mixture:** | |
|---|---|
| Modified starch | 0,5 - 1,5 kg |
| Guar gum | 0,05 - 0,5 kg |
| Xanthan gum | 0,05 - 0,5 kg |
| Flavour | 0,05 - 0,5 kg |
| Ascorbic acid | 0,05 - 0,5 kg |

## Claims

1. Frozen fruits or frozen fruit pieces coated with between 1 weight % and 2 weight % of coating powder able to avoid juice leaking from said fruits or fruit pieces applied in a layer, wherein said coating powder comprises a mixture of stabilising agents made of modified starch and edible gums.

2. Frozen fruits or frozen fruit pieces according to the claim 1, wherein said coating powder is a mixture of stabilising and gelling agents selected from the group consisting of modified starch, pectines, fructans and edible gums having gelling properties.

3. Frozen fruits or frozen fruit pieces according to any of the preceding claims, **characterised in that** the fruits are strawberries.

4. Frozen fruits or frozen fruit pieces according to any of the preceding claims **characterised in that** the coating powder further comprises one or more additive(s) selected from the group consisting of colouring agents, food grade acids or flavours.

5. Preparation process of the frozen fruits or frozen fruit pieces according to any of the preceding claims, comprising the following steps:
- loading a continuously agitating sealed preparation container with individually quick frozen fruits,
- deaerating said continuously agitating sealed preparation container,
- dosing the coating powder on the fruits,
- mixing the fruits on the powder in order to obtain an homogenous dispersion of the coating powder upon the surface of the fruits,
- recovering the obtained fruits.

6. The process according to the claim 5, **characterised in that** it further comprises the steps of discharging, packaging and storage, preferably in sterile plastic bags, of the obtained fruits.

7. The process according to the claim 5 or 6, **characterised in that** all the steps of said method are performed under deep-freeze temperature conditions.

8. The process according to any of the claims 5 to 7, **characterised in that** said deaeration step comprises lowering the pressure in said container to 0.2 bar or less.

9. Use of the frozen fruits or the frozen fruit pieces according to any of the preceding claims 1 to 4, or obtained according to the method of the claim 5 to 8 for the preparation of a food composition.

10. Use according to the claim 9 in pastry, preferably for the preparation of pies.

## Patentansprüche

1. Gefrorene Früchte oder gefrorene Fruchtstücke, beschichtet mit zwischen 1 Gew.-% und 2 Gew.-% Beschichtungspulver, welches imstande ist, Austreten von Saft aus den besagten Früchten oder Fruchtstücken zu vermeiden, angewendet in einer Schicht, wobei besagtes Beschichtungspulver ein Gemisch aus Stabilisierungsmitteln umfasst, hergestellt aus modifizierter Stärke und essbaren Gummis.

2. Gefrorene Früchte oder gefrorene Fruchtstücke gemäß Anspruch 1, wobei besagtes Beschichtungspulver ein Gemisch aus Stabilisierungs- und Geliermitteln ist, ausgewählt aus der Gruppe bestehend aus modifizierter Stärke, Pektinen, Fruktanen und essbaren Gummis mit Geliereigenschaften.

3. Gefrorene Früchte oder gefrorene Fruchtstücke gemäß einem der vorangehenden Ansprüche, **dadurch gekennzeichnet, dass** die Früchte Erdbeeren sind.

4. Gefrorene Früchte oder gefrorene Fruchtstücke gemäß einem der vorangehenden Ansprüche, **dadurch gekennzeichnet, dass** das Beschichtungspulver ferner einen oder mehrere Zusatzstoff(e) umfasst, ausgewählt aus der Gruppe bestehend aus Farbstoffen, Säuren in Lebensmittelqualität oder Geschmackstoffen.

5. Herstellungsverfahren für die gefrorenen Früchte oder gefrorenen Fruchtstücke gemäß einem der vorangehenden Ansprüche, welches die folgenden Schritte umfasst:
- Beladen eines kontinuierlich rührenden, versiegelten Herstellungsbehälters mit einzeln schockgefrosteten Früchten,
- Entlüften des besagten kontinuierlich rührenden, versiegelten Herstellungsbehälters,
- Dosieren des Beschichtungspulvers auf die Früchte,
- Mischen der Früchte auf dem Pulver, um eine homogene Dispersion des Beschichtungspulvers auf der Oberfläche der Früchte zu erhalten,
- Zurückgewinnen der erhaltenen Früchte.

6. Verfahren gemäß Anspruch 5, **dadurch gekennzeichnet, dass** es ferner den Schritt des Ausbringens, Verpackens und Lagerns, vorzugsweise in sterilen Kunststoffbeuteln, der erhaltenen Früchte umfasst.

7. Verfahren gemäß Anspruch 5 oder 6, **dadurch gekennzeichnet, dass** alle Schritte des besagten Verfahrens unter Tiefkühltemperaturbedingungen durchgeführt werden.

8. Verfahren gemäß einem der Ansprüche 5 bis 7, **dadurch gekennzeichnet, dass** besagter Entlüftungsschritt Senken des Drucks in besagtem Behälter auf 0,2 bar oder weniger umfasst.

9. Verwenden der gefrorenen Früchte oder der gefrorenen Fruchtstücke gemäß einem der vorangehenden Ansprüche 1 bis 4 oder erhalten gemäß dem Verfahren des Anspruchs 5 bis 8 für die Herstellung einer Nahrungsmittelzusammensetzung.

10. Verwendung gemäß Anspruch 9 in Backwaren, vorzugsweise für die Herstellung von Kuchen.

## Revendications

1. Fruits congelés ou morceaux de fruits congelés enrobés avec entre 1 et 2 % en poids d'une poudre d'enrobage capable d'éviter que le jus ne coule desdits fruits ou morceaux de fruits appliqués dans une couche, dans lesquels ladite poudre d'enrobage comprend un mélange d'agents stabilisants à base d'amidon modifié et de gommes comestibles.

2. Fruits congelés ou morceaux de fruits congelés selon la revendication 1, dans lesquels ladite poudre d'enrobage est un mélange d'agents stabilisants et gélifiants choisis dans le groupe constitué par l'amidon modifié, les pectines, les fructanes et les gommes comestibles ayant des propriétés gélifiantes.

3. Fruits congelés ou morceaux de fruits congelés selon l'une quelconque des revendications précédentes, **caractérisés en ce que** les fruits sont des fraises.

4. Fruits congelés ou morceaux de fruits congelés selon l'une quelconque des revendications précédentes **caractérisés en ce que** ladite poudre d'enrobage comprend en outre un ou plusieurs additifs choisis dans le groupe constitué par les agents colorants, les acides de qualité alimentaire ou les aromatisants.

5. Procédé de préparation des fruits congelés ou des morceaux de fruits congelés selon l'une quelconque des revendications précédentes, comprenant les étapes suivantes :
- le chargement d'un récipient pour préparation scellé sous agitation continue avec des fruits surgelés individuellement,
- la désaération dudit récipient pour préparation scellé sous agitation continue,
- le dosage de la poudre d'enrobage sur les fruits,
- le mélange des fruits sur la poudre afin d'obtenir une dispersion homogène de la poudre d'enrobage sur la surface des fruits,
- la récupération des fruits obtenus.

6. Procédé selon la revendication 5, **caractérisé en ce qu'**il comprend en outre les étapes de déchargement, d'emballage et de stockage, de préférence dans des sacs en plastique stériles, des fruits obtenus.

7. Procédé selon la revendication 5 ou 6, **caractérisé en ce que** toutes les étapes dudit procédé sont mises en oeuvre dans des conditions de températures de surgélation.

8. Procédé selon l'un quelconque des revendications 5 à 7, **caractérisé en ce que** ladite étape de désaération comprend l'abaissement de la pression dans ledit récipient à 0,2 bar ou moins.

9. Utilisation des fruits congelés ou des morceaux de fruits congelés selon l'une quelconque des revendications 1 à 4 précédentes, ou obtenus selon le procédé de la revendication 5 à 8 pour la préparation d'une composition alimentaire.

10. Utilisation selon la revendication 9 en pâtisserie, de préférence pour la préparation de tartes.
